# EUROPEAN PATENT APPLICATION

(11) **EP 3 597 047 A1**
(43) Date of publication of application: **22.01.2020**
(21) Application number: 18767934.5
(22) Date of filing: 09.03.2018
(51) Int. Cl.: A23G 1/48, A23G 1/46

(54) **CHOCOLATE CONTAINING POWDERED GREEN TEA**

(30) Priority: 13.03.2017 JP 2017047844
(71) Applicant: The Nisshin OilliO Group, Ltd., Tokyo 104-8285 (JP); DAITO CACAO CO., LTD., Tokyo 153-0064 (JP)
(72) Inventor: MYOJO, Naoko, Tokyo 153-0064 (JP); NAKAGAWA, Sho, Tokyo 153-0064 (JP); HASEGAWA, Tsutomu, Tokyo 153-0064 (JP)
(74) Representative: Winter, Brandl, Fürniss, Hübner, Röss, Kaiser, Polte - Partnerschaft mbB
(86) International application number: PCT/JP2018/009127
(87) International publication number: WO 2018/168669

(57) **Abstract**

The purpose of the present invention is to provide a delicious chocolate containing powdered green tea. A chocolate containing powdered green tea, wherein the ratio by mass of the total content of tannin and caffeine to the content of theanine is 11.0 or smaller and the total content of tannin and caffeine is 0.80 mass% or smaller. A method for manufacturing a chocolate characterized by comprising adding powdered green tea, controlling the ratio by mass of the total content of tannin and caffeine to the theanine content of chocolate to 11.0 or smaller and also controlling the total content of tannin and caffeine to 0.80 mass% or smaller. A method for improving the flavor of a chocolate containing powdered green tea, said method being characterized by comprising controlling the ratio by mass of the total content of tannin and caffeine to the content of theanine to 11.0 or smaller and also controlling the total content of tannin and caffeine to 0.80 mass% or smaller.

## Description

### TECHNICAL FIELD

The present invention relates to a chocolate containing powdered green tea ("Matcha").

### BACKGROUND ART

In recent years, confectioneries made using powdered green tea are very popular, and many such products are available on the market. For example, Patent Literature 1, Patent Literature 2 and Patent Literature 3 have proposed confectioneries made using powdered green tea.

Chocolate containing powdered green tea is a very popular product among the confectioneries made using powdered green tea. Chocolate containing powdered green tea is produced by adding powdered green tea to white chocolate. Therefore, the flavor of chocolate containing powdered green tea relies heavily on powdered green tea to be added. On the other hand, the flavor of powdered green tea is sometimes different depending on brand, etc. Therefore, chocolate containing powdered green tea is sometimes not tasty depending on powdered green tea to be used.

Due to such background, there is a demand to develop delicious chocolate containing powdered green tea.

### CITATION LIST

### PATENT LITERATURES

Patent Literature 1: JP 2000-41569A
Patent Literature 2:JP 2003-284500A
Patent Literature 3:JP 2011-50364A

### SUMMARY OF INVENTION

### TECHNICAL PROBLEM

It is an object of the invention to provide a delicious chocolate containing powdered green tea.

### SOLUTION TO PROBLEM

As a result of intense study to solve such problem, the present inventors found that a delicious chocolate containing powdered green tea is obtained when the ratio of mass of the total content of tannin and caffeine to the content of theanine and the total content of tannin and caffeine are adjusted to fall within specific numerical ranges, and the present invention was completed.

In detail, a first aspect of the invention is a chocolate, comprising: powdered green tea, wherein the ratio of mass of the total content of tannin and caffeine to the content of theanine is not more than **11.0,** and the total content of tannin and caffeine is not more than **0.80** mass%.
A second aspect of the invention is the chocolate described in the first aspect, wherein the content of theanine is not less than **0.008** mass%.
A third aspect of the invention is the chocolate described in the first aspect or the second aspect, further comprising: one or more of theanine, tannin and caffeine other than the theanine, tannin and caffeine contained in the powdered green tea.
A fourth aspect of the invention is the chocolate described in any one of the first aspect to the third aspect, wherein the content of non-fat cacao solid is less than 1 mass%.
A fifth aspect of the invention is the chocolate described in any one of the first aspect to the fourth aspect, further comprising: a saccharide and a milk product.
A sixth aspect of the invention is a method for manufacturing a chocolate, comprising: adding powdered green tea; adjusting the ratio of mass of the total content of tannin and caffeine to the content of theanine in chocolate to not more than **11.0,** and also adjusting the total content of tannin and caffeine to not more than **0.80** mass%.
A seventh aspect of the invention is the method for manufacturing a chocolate described in the sixth aspect, wherein one or more of theanine, tannin and caffeine other than the theanine, tannin and caffeine contained in the powdered green tea is/are added.
An eighth aspect of the invention is the method for manufacturing a chocolate described in the sixth aspect or the seventh aspect, further comprising: adding a saccharide and a milk product.
A ninth aspect of the invention is a method for improving the flavor of a chocolate containing powdered green tea, the method comprising: adjusting the ratio of mass of the total content of tannin and caffeine to the content of theanine to not more than **11.0,** and also adjusting the total content of tannin and caffeine to not more than **0.80** mass%.
A tenth aspect of the invention is the method for improving the flavor of a chocolate containing powdered green tea described in the ninth aspect, further comprising: adding a saccharide and a milk product.

### ADVANTAGEOUS EFFECTS OF INVENTION

According to the invention, it is possible to provide a delicious chocolate containing powdered green tea.

### DESCRIPTION OF EMBODIMENT

A chocolate in an embodiment of the invention contains powdered green tea, and is configured that the ratio of mass of the total content of tannin and caffeine to the content of theanine is not more than **11.0,** and the total content of tannin and caffeine is not more than **0.80** mass%.

The chocolate of the invention is not limited to those prescribed in "Fair Competition Codes concerning Labeling on Chocolates" (Japan Chocolate Industry Fair Trade Council) or in regulations. In the present invention, the chocolate is a food made mainly from edible oil-and/or-fats and saccharides with, if necessary, milk products, flavorings and emulsifiers added thereto, is produced through chocolate production processes (through all or some of a blending process, a refining process, a conching process, a molding process and a cooling process, etc.,) and the chocolate is a food in which oil-and/or-fats form a continuous phase.

The chocolate in the embodiment of the invention has preferably a water content of not more than **3** mass%.

The chocolate in the embodiment of the invention contains powdered green tea. That is, the chocolate in the embodiment of the invention is a powdered green tea-containing chocolate which contains the added powdered green tea.

The powdered green tea used to produce the chocolate in the embodiment of the invention is not specifically limited as long as it is powdered green tea. The powdered green tea ("Matcha") used to produce the chocolate in the embodiment of the invention is preferably powdered green tea available on the market since it is easy to obtain. The powdered green tea is tea in the powder form produced by, e.g., grinding dried unfermented tea leaves in a stone mill, etc. The unfermented tea leaves are tea leaves which are not fermented. The unfermented tea leaves are obtained by heating, e.g., steaming the harvested tea leaves with vapor. Of the unfermented tea leaves, shade-grown tea leaves which are dried without being kneaded are called "Tencha". Tea leaves used to make powdered green tea are leaves of tea plant (scientific name: Camellia sinensis). The chocolate in the embodiment of the invention preferably contains not less than **0.5** mass%, more preferably **0.5** to **10** mass%, and further preferably **0.7** to **7** mass% of the powdered green tea.

In the chocolate in the embodiment of the invention, the ratio of mass of the total content of tannin and caffeine (mass%) to the content of theanine (mass%) is not more than **11.0,** preferably not more than **10.7,** and more preferably **6.0** to **10.5.** When the ratio of mass of the total content of tannin and caffeine to the content of theanine is within such range, the flavor is well balanced and delicious powdered green tea-containing chocolate is obtained.

In the chocolate in the embodiment of the invention, the total content of tannin and caffeine is not more than **0.80** mass%, preferably not more than **0.70** mass%, and more preferably **0.08** to **0.65** mass%. When the total content of tannin and caffeine is within such range, delicious powdered green tea-containing chocolate is obtained.

In the chocolate in the embodiment of the invention, the content of theanine is preferably not less than **0.008** mass%, more preferably not less than **0.010** mass%, and further preferably **0.012** to **0.090** mass%. When the content of theanine is within such range, more delicious powdered green tea-containing chocolate is obtained.

In the chocolate in the embodiment of the invention, the content of tannin is preferably not more than **0.60** mass%, more preferably not more than **0.50** mass%, and further preferably **0.05** to **0.48** mass%.

In the chocolate in the embodiment of the invention, the content of caffeine is preferably not more than **0.23** mass%, more preferably not more than **0.20** mass%, and further preferably **0.01** to **0.17** mass%.

The powdered green tea contains theanine, tannin and caffeine. Thus, the ratio of mass of the total content of tannin and caffeine to the content of theanine, the total content of tannin and caffeine, the content of theanine, the content of tannin and the content of caffeine in the chocolate in the embodiment of the invention can be adjusted to fall within the above-mentioned ranges by adding the powdered green tea to the chocolate. In detail, it is possible to adjust the ratio of mass of the total content of tannin and caffeine to the content of theanine, the total content of tannin and caffeine, the content of theanine, the content of tannin and the content of caffeine in the chocolate by, e.g., adding the powdered green tea, in which the ratio of mass of the total content of tannin and caffeine to the content of theanine satisfies the above-mentioned range, to the chocolate so that the total content of tannin and caffeine, the content of theanine, the content of tannin and the content of caffeine satisfy the above-mentioned ranges.

When the above-mentioned ranges for the ratio of mass of the total content of tannin and caffeine to the content of theanine, the total content of tannin and caffeine, the content of theanine, the content of tannin and the content of caffeine in the chocolate are not satisfied only by adding the powdered green tea, it is also possible to adjust the ratio of mass of the total content of tannin and caffeine to the content of theanine, the total content of tannin and caffeine, the content of theanine, the content of tannin and the content of caffeine by adding theanine, tannin and caffeine. In other words, the chocolate in the embodiment of the invention preferably contains one or more of theanine, tannin and caffeine other than the theanine, tannin and caffeine contained in the added powdered green tea. More preferably, the chocolate in the embodiment of the invention contains theanine other than the theanine contained in the added powdered green tea. Delicious powdered green tea-containing chocolate may not obtained only by adding the powdered green tea when its brand or production lot, etc., is different. However, in the invention, even in case that only adding the powdered green tea is not enough to obtain delicious powdered green tea-containing chocolate, it is possible to obtain delicious powdered green tea-containing chocolate by adding theanine, tannin and caffeine in addition to the powdered green tea. One or more of theanine, tannin and caffeine other than the theanine, tannin and caffeine contained in the added powdered green tea can be added even when the above-mentioned ranges for the ratio of mass of the total content of tannin and caffeine to the content of theanine, the total content of tannin and caffeine, the content of theanine, the content of tannin and the content of caffeine in the chocolate are satisfied only by adding the powdered green tea.

The content of non-fat cacao solid in the chocolate in the embodiment of the invention is preferably less than **1** mass%, more preferably less than **0.5** mass%, and further preferably **0** mass%. The non-fat cacao solid in the present invention is a solid remained after removing oil-and/or-fats from cacao beans, cacao nibs, a cocoa mass or cocoa powder, etc.

The chocolate in the embodiment of the invention preferably contains an oil-and/or-fat. An edible oil-and/or-fat commonly used in chocolate production can be used to make the chocolate in the embodiment of the invention. Examples of the edible oil-and/or-fat used chocolate production include cocoa butter, palm oil, palm kernel oil, coconut oil, shea butter, sal fat, illipe oil, soybean oil, rapeseed oil, cottonseed oil, safflower oil, sunflower oil and milkfat, etc., and processed oils-and/or-fats thereof (hydrogenated oil, fractionated oil, transesterified oil), etc. It is possible to use a combination of two or more of these edible oils-and/or-fats. The oil-and/or-fat used to make the chocolate in the embodiment of the invention is preferably cocoa butter or milkfat.

The chocolate in the embodiment of the invention contains preferably **25** to **65** mass%, more preferably **30** to **63** mass%, and further preferably **35** to **60** mass% of the oil-and/or-fat.

The oil-and/or-fat in the present invention is the total oil and fat content in the chocolate, and includes oils-and/or-fats (milkfat, etc.) contained in the oil-containing ingredients (dry whole milk, etc.), in addition to the blended oil-and/or-fat.

The chocolate in the embodiment of the invention preferably contains a saccharide. Saccharides commonly used in chocolate production can be used to make the chocolate in the embodiment of the invention. Examples of the saccharides used in chocolate production include sucrose (sugar, powder sugar), lactose, glucose, fructose, maltose, sorbitol, trehalose, xylose, xylitol, maltitol, erythritol, mannitol and raffinose, etc. It is possible to use a combination of two or more of these saccharides. The saccharide used to make the chocolate in the embodiment of the invention is preferably sucrose (sugar, powder sugar) or lactose, and more preferably sugar.

The chocolate in the embodiment of the invention contains preferably **20** to **65** mass%, more preferably **23** to **60** mass%, further preferably **25** to **55** mass%, and most preferably **25** to **45** mass% of saccharide.

The chocolate in the embodiment of the invention contains preferably **20** to **65** mass%, more preferably **23** to **60** mass%, further preferably **25** to **55** mass%, and most preferably **25** to **45** mass% of sugar.

The chocolate in the embodiment of the invention preferably contains a milk product (dairy product). A milk product commonly used in chocolate production can be used to make the chocolate in the embodiment of the invention. The milk product used in chocolate production is preferably milk powder, more preferably dry whole milk or powdered skim milk, and further preferably dry whole milk.

The chocolate in the embodiment of the invention contains preferably **10** to **40** mass%, more preferably **15** to **35** mass%, and further preferably **18** to **30** mass% of milk product.

Ingredients generally blended in chocolate can be used to make the chocolate in the embodiment of the invention. In detail, it is possible to use, e.g., gums, starches, emulsifiers such as lecithin, lysolecithin, enzyme-decomposed lecithin, sucrose fatty acid ester, polyglycerol condensed ricinoleic acid ester, polyglycerol fatty acid ester and sorbitan fatty acid ester, antioxidants, colorants and flavorings, etc.

The chocolate in the embodiment of the invention can be produced by adding powdered green tea and adjusting the ratio of mass of the total content of tannin and caffeine to the content of theanine and the total content of tannin and caffeine to fall within the above-mentioned ranges. In a preferable manner, the chocolate in the embodiment of the invention can be produced by adding powdered green tea and adjusting the ratio of mass of the total content of tannin and caffeine to the content of theanine, the total content of tannin and caffeine, the content of theanine, the content of tannin and the content of caffeine in the chocolate to fall within the above-mentioned ranges.

In a preferable manner, the chocolate in the embodiment of the invention can be produced by adding theanine, tannin and caffeine other than the theanine, tannin and caffeine contained in the added powdered green tea. In a more preferable manner, the chocolate in the embodiment of the invention can be produced by adding theanine other than the theanine contained in the added powdered green tea.

The chocolate in the embodiment of the invention can be produced by a conventionally known method for producing powdered green tea-containing chocolate, except that powdered green tea and, if required, one or more of theanine, tannin and caffeine are added. The chocolate in the embodiment of the invention can be made using, e.g., powdered green tea, theanine, tannin, caffeine, oils-and/or-fats, saccharides and emulsifiers as ingredients and produced through a blending process, a refining process, a conching process and a cooling process, etc. The chocolate in the embodiment of the invention is preferably produced through the refining process.

The chocolate in the embodiment of the invention is delicious powdered green tea-containing chocolate with well-balanced flavor. This means that, according to the invention, it is possible to improve the flavor of a chocolate containing powdered green tea by adjusting the ratio of mass of the total content of tannin and caffeine to the content of theanine and the total content of tannin and caffeine to fall within the above-mentioned ranges. In addition, according to the invention, it is possible to further improve the flavor of a chocolate containing powdered green tea by adjusting the ratio of mass of the total content of tannin and caffeine to the content of theanine, the total content of tannin and caffeine, the content of theanine, the content of tannin and the content of caffeine in the chocolate to fall within the above-mentioned ranges.

The chocolate in the embodiment of the invention can be combined with other food such as confectionery or bread.

Examples of a method for combining the chocolate in the embodiment of the invention with other food such as confectionery or bread include coating, injecting, filling and sandwiching, etc.

### Examples

Next, the invention will be described in reference to Examples. However, the invention is not limited to these Examples.

### Production of Chocolate and Evaluation

Using five types of powdered green tea, chocolates were made according to the formulas in Tables **1** to **6** by a common chocolate production method (blending, refining, conching and cooling) (the content of non-fat cacao solid in chocolate was **0** mass% in all chocolates, and the water content in chocolate was not more than **3** mass% in all chocolates). Note that, the unit is parts by mass for the proportions of the components of the chocolate and mass% for the contents (no unit for the ratio of mass).
Fifteen expert panels ate each chocolate and gave a score for balance of flavor (balance between savory taste, richness and bitterness of taste, astringency) and deliciousness according to the following evaluation criteria. The average of the scores given by the fifteen panels was calculated and evaluated in accordance with the following evaluation criteria. The products given with "○" for both evaluation results were regarded as delicious chocolate with well-balanced flavor. Note that, the expert panels who evaluated balance of flavor and deliciousness of chocolate are regularly trained in sensory evaluation to evaluate flavor and deliciousness, etc., of chocolate, and the results of sensory evaluation for flavor and deliciousness, etc., of chocolate do not vary between individuals. The evaluation results are shown in Table **1** to **6.**

Two points: good
One point: somewhat good
Zero point: poor

### Average score

○: not less than **1.5** points
Δ: not less than **1.0** point and less than **1.5** points
×: less than **1.0** points

**Table 1**

| Table **1** Proportions for chocolate | | | | | |
|---|---|---|---|---|---|
| | | Example **1** | Example **2** | Example **3** | Comparative Example **1** |
| Cocoa butter | | **43** | **43** | **43** | **43** |
| Sugar | | **30** | **30** | **30** | **30** |
| Lactose | | **5** | **5** | **5** | **5** |
| Dry whole milk | | **20** | **20** | **20** | **20** |
| Powdered green tea A | | **2** | **0** | **0** | **0** |
| Powdered green tea B | | **0** | **2** | **0** | **0** |
| Powdered green tea C | | **0** | **0** | **2** | **0** |
| Powdered green tea D | | **0** | **0** | **0** | **2** |
| Powdered green tea E | | **0** | **0** | **0** | **0** |
| Theanine | | **0** | **0** | **0** | **0** |
| Lecithin | | **0.4** | **0.4** | **0.4** | **0.4** |
| Oil-and/or-fat content | | **47.8** | **47.8** | **47.8** | **47.8** |
| Saccharides content | | **34.9** | **34.9** | **34.9** | **34.9** |
| Sugar content | | **29.9** | **29.9** | **29.9** | **29.9** |
| Milk product content | | **19.9** | **19.9** | **19.9** | **19.9** |
| Theanine content | | **0.0301** | **0.0305** | **0.0249** | **0.0155** |
| Tannin content | | **0.159** | **0.178** | **0.174** | **0.207** |
| Caffeine content | | **0.062** | **0.058** | **0.048** | **0.034** |
| Total content of tannin and caffeine | | **0.221** | **0.236** | **0.222** | **0.241** |
| (tannin + caffeine)/theanine mass ratio | | **7.35** | **7.75** | **8.91** | **15.57** |
| Evaluation result | Balance of Flavor | ○ | ○ | ○ | × |
| | Deliciousness | ○ | ○ | ○ | Δ |

**Table 2**

| Table **2** Proportions for chocolate | | | | | |
|---|---|---|---|---|---|
| | | Comparative Example **2** | Example **4** | Example **5** | Example **6** |
| Cocoa butter | | **43** | **43** | **43** | **43** |
| Sugar | | **30** | **30** | **30** | **30** |
| Lactose | | **5** | **5** | **5** | **5** |
| Dry whole milk | | **20** | **20** | **20** | **20** |
| Powdered green tea A | | **0** | **0** | **0** | **0** |
| Powdered green tea B | | **0** | **0** | **0** | **0** |
| Powdered green tea C | | **0** | **2** | **0** | **0** |
| Powdered green tea D | | **0** | **0** | **0** | **0** |
| Powdered green tea E | | **2** | **0** | **2** | **2** |
| Theanine | | **0** | **0.008** | **0.02** | **0.01** |
| Lecithin | | **0.4** | **0.4** | **0.4** | **0.4** |
| Oil-and/or-fat content | | **47.8** | **47.8** | **47.8** | **47.8** |
| Saccharides content | | **34.9** | **34.9** | **34.9** | **34.9** |
| Sugar content | | **29.9** | **29.9** | **29.9** | **29.9** |
| Milk product content | | **19.9** | **19.9** | **19.9** | **19.9** |
| Theanine content | | **0.0142** | **0.0329** | **0.0342** | **0.0242** |
| Tannin content | | **0.193** | **0.174** | **0.193** | **0.193** |
| Caffeine content | | **0.026** | **0.048** | **0.026** | **0.026** |
| Total content of tannin and caffeine | | **0.219** | **0.222** | **0.219** | **0.219** |
| (tannin + caffeine)/theanine mass ratio | | **15.40** | **6.75** | **6.42** | **9.06** |
| Evaluation result | Balance of Flavor | × | ○ | ○ | ○ |
| | Deliciousness | × | ○ | ○ | ○ |

**Table 3**

| Table **3** Proportions for chocolate | | | | | |
|---|---|---|---|---|---|
| | | Example **7** | Comparative Example **3** | Comparative Example **4** | Comparative Example **5** |
| Cocoa butter | | **43** | **43** | **43** | **43** |
| Sugar | | **30** | **30** | **30** | **30** |
| Lactose | | **5** | **5** | **5** | **5** |
| Dry whole milk | | **20** | **20** | **20** | **20** |
| Powdered green tea A | | **0** | **0** | **0** | **0** |
| Powdered green tea B | | **0** | **0** | **0** | **0** |
| Powdered green tea C | | **0** | **0** | **0** | **0** |
| Powdered green tea D | | **0** | **0** | **0** | **0** |
| Powdered green tea E | | **2** | **2** | **2** | **2** |
| Theanine | | **0.007** | **0.005** | **0.003** | **0.001** |
| Lecithin | | **0.4** | **0.4** | **0.4** | **0.4** |
| Oil-and/or-fat content | | **47.8** | **47.8** | **47.8** | **47.8** |
| Saccharides content | | **34.9** | **34.9** | **34.9** | **34.9** |
| Sugar content | | **29.9** | **29.9** | **29.9** | **29.9** |
| Milk product content | | **19.9** | **19.9** | **19.9** | **19.9** |
| Theanine content | | **0.0212** | **0.0192** | **0.0172** | **0.0152** |
| Tannin content | | **0.193** | **0.193** | **0.193** | **0.193** |
| Caffeine content | | **0.026** | **0.026** | **0.026** | **0.026** |
| Total content of tannin and caffeine | | **0.219** | **0.219** | **0.219** | **0.219** |
| (tannin + caffeine)/theanine mass ratio | | **10.34** | **11.41** | **12.73** | **14.39** |
| Evaluation result | Balance of Flavor | ○ | × | × | × |
| | Deliciousness | ○ | Δ | × | × |

**Table 4**

| Table **4** Proportions for chocolate | | | | | |
|---|---|---|---|---|---|
| | | Example **8** | Example **9** | Comparative Example **6** | Comparative Example **7** |
| Cocoa butter | | **43** | **43** | **43** | **43** |
| Sugar | | **30** | **30** | **29** | **27** |
| Lactose | | **6** | **2** | **0** | **0** |
| Dry whole milk | | **20** | **20** | **20** | **20** |
| Powdered green tea A | | **1** | **5** | **8** | **10** |
| Powdered green tea B | | **0** | **0** | **0** | **0** |
| Powdered green tea C | | **0** | **0** | **0** | **0** |
| Powdered green tea D | | **0** | **0** | **0** | **0** |
| Powdered green tea E | | **0** | **0** | **0** | **0** |
| Theanine | | **0.001** | **0.001** | **0.001** | **0.001** |
| Lecithin | | **0.4** | **0.4** | **0.4** | **0.4** |
| Oil-and/or-fat content | | **47.8** | **47.8** | **47.8** | **47.8** |
| Saccharides content | | **35.9** | **31.9** | **28.9** | **26.9** |
| Sugar content | | **29.9** | **29.9** | **28.9** | **26.9** |
| Milk product content | | **19.9** | **19.9** | **19.9** | **19.9** |
| Theanine content | | **0.0160** | **0.0762** | **0.1213** | **0.1514** |
| Tannin content | | **0.080** | **0.398** | **0.637** | **0.797** |
| Caffeine content | | **0.031** | **0.155** | **0.247** | **0.309** |
| Total content of tannin and caffeine | | **0.111** | **0.553** | **0.884** | **1.106** |
| (tannin + caffeine)/theanine mass ratio | | **6.89** | **7.25** | **7.29** | **7.30** |
| Evaluation result | Balance of Flavor | ○ | ○ | ○ | ○ |
| | Deliciousness | ○ | ○ | Δ | × |

**Table 5**

| Table **5** Proportions for chocolate | | | | | |
|---|---|---|---|---|---|
| | | Example **10** | Example **11** | Example **12** | Example **13** |
| Cocoa butter | | **38** | **38** | **38** | **38** |
| Sugar | | **35** | **35** | **40** | **40** |
| Lactose | | **5** | **5** | **0** | **0** |
| Dry whole milk | | **20** | **20** | **20** | **20** |
| Powdered green tea A | | **2** | **0** | **0** | **0** |
| Powdered green tea B | | **0** | **2** | **2** | **0** |
| Powdered green tea C | | **0** | **0** | **0** | **2** |
| Powdered green tea D | | **0** | **0** | **0** | **0** |
| Powdered green tea E | | **0** | **0** | **0** | **0** |
| Theanine | | **0** | **0** | **0** | **0** |
| Lecithin | | **0.4** | **0.4** | **0.4** | **0.4** |
| Oil-and/or-fat content | | **42.8** | **42.8** | **42.8** | **42.8** |
| Saccharides content | | **39.8** | **39.8** | **39.8** | **39.8** |
| Sugar content | | **34.9** | **34.9** | **39.8** | **39.8** |
| Milk product content | | **19.9** | **19.9** | **19.9** | **19.9** |
| Theanine content | | **0.0301** | **0.0305** | **0.0305** | **0.0249** |
| Tannin content | | **0.159** | **0.178** | **0.178** | **0.174** |
| Caffeine content | | **0.062** | **0.058** | **0.058** | **0.048** |
| Total content of tannin and caffeine | | **0.221** | **0.236** | **0.236** | **0.222** |
| (tannin + caffeine)/theanine mass ratio | | **7.35** | **7.75** | **7.75** | **8.91** |
| Evaluation result | Balance of Flavor | ○ | ○ | ○ | ○ |
| | Deliciousness | ○ | ○ | ○ | ○ |

**Table 6**

| Table **6** Proportions for chocolate | | | |
|---|---|---|---|
| | | Example **14** | Example **15** |
| Cocoa butter | | **40** | **40** |
| Sugar | | **33** | **33** |
| Lactose | | **0** | **0** |
| Dry whole milk | | **25** | **25** |
| Powdered green tea A | | **0** | **0** |
| Powdered green tea B | | **2** | **0** |
| Powdered green tea C | | **0** | **2** |
| Powdered green tea D | | **0** | **0** |
| Powdered green tea E | | **0** | **0** |
| Theanine | | **0** | **0** |
| Lecithin | | **0.4** | **0.4** |
| Oil-and/or-fat content | | **46.1** | **46.1** |
| Saccharides content | | **32.9** | **32.9** |
| Sugar content | | **32.9** | **32.9** |
| Milk product content | | **24.9** | **24.9** |
| Theanine content | | **0.0305** | **0.0249** |
| Tannin content | | **0.178** | **0.174** |
| Caffeine content | | **0.058** | **0.048** |
| Total content of tannin and caffeine | | **0.236** | **0.222** |
| (tannin + caffeine)/theanine mass ratio | | **7.75** | **8.91** |
| Evaluation result | Balance of Flavor | ○ | ○ |
| | Deliciousness | ○ | ○ |

As understood from Tables **1** to **6,** the chocolates in Examples **1** to **15** had well-balanced flavor and were delicious.

On the other hand, as understood from Tables **1** to **3,** the chocolates in Comparative Examples **1** to **5** had poor-balanced flavor and were not delicious. In addition, as understood from Table **4,** the chocolates in Comparative Examples **6** and **7** had well-balanced flavor but were not delicious.

## Claims

1. A chocolate, comprising:
powdered green tea,
wherein the ratio of mass of the total content of tannin and caffeine to the content of theanine is not more than **11.0,** and the total content of tannin and caffeine is not more than **0.80** mass%.

2. The chocolate according to claim **1,** wherein the content of theanine is not less than **0.008** mass%.

3. The chocolate according to claim **1** or **2,** further comprising:
one or more of theanine, tannin and caffeine other than the theanine, tannin and caffeine contained in the powdered green tea.

4. The chocolate according to any one of claims **1** to **3,** wherein the content of non-fat cacao solid is less than **1** mass%.

5. The chocolate according to any one of claims **1** to **4,** further comprising:
a saccharide and a milk product.

6. A method for manufacturing a chocolate, comprising:
adding powdered green tea; and
adjusting the ratio of mass of the total content of tannin and caffeine to the content of theanine in chocolate to not more than **11.0,** and also adjusting the total content of tannin and caffeine to not more than **0.80** mass%.

7. The method for manufacturing a chocolate according to claim **6,** wherein one or more of theanine, tannin and caffeine other than the theanine, tannin and caffeine contained in the powdered green tea is/are added.

8. The method for manufacturing a chocolate according to claim **6** or **7,** further comprising:
adding a saccharide and a milk product.

9. A method for improving the flavor of a chocolate containing powdered green tea, the method comprising:
adjusting the ratio of mass of the total content of tannin and caffeine to the content of theanine to not more than **11.0,** and also adjusting the total content of tannin and caffeine to not more than **0.80** mass%.

10. The method for improving the flavor of a chocolate containing powdered green tea according to claim **9,** further comprising:
adding a saccharide and a milk product.
